# EUROPEAN PATENT APPLICATION

(11) **EP 4 667 156 A2**
(43) Date of publication of application: **24.12.2025**
(21) Application number: 25214329.2
(22) Date of filing: 19.06.2023
(51) Int. Cl.: B24B 55/06

(54) **PRE-FILTER ARRANGEMENTS AND VALVES FOR AN INDUSTRIAL DUST EXTRACTOR**

(30) Priority: 07.07.2022 SE 2250866; 07.07.2022 SE 2250867; 07.07.2022 SE 2250868
(62) Divisional of application: 23835928.5
(71) Applicant: Husqvarna AB, 561 82 Huskvarna (SE)
(72) Inventor: Wennberg, Elon, Hisings Backa (SE); Sjöberg, Axel, Västra Frölunda (SE); Küsel, Robert, Göteborg (SE); Elmestrand, Karl, Sävedalen (SE)

(57) **Abstract**

A dust extractor (100) comprising at least a first and a second valve arrangement (400) and a pre-separator tank (120) with a pre-filter system,
where the pre-filter system comprises at least a first part and a second part,
where each valve arrangement (400) is configured to generate a reverse flow of air to clean an associated part of the pre-filter system, in response to actuation of a respective trigger device (470, 480) configured to place the valve arrangement in a pre-filter cleaning position,
where the first valve arrangement is associated with cleaning of the first part of the pre-filter system and the second valve arrangement is associated with cleaning of the second part of the pre-filter system,
where actuation of the trigger devices can be performed alternately where only one of the first and second valve arrangements is placed in its pre-filter cleaning position, or with time overlap where both the first and the second valve arrangements are placed in their respective pre-filter cleaning positions.

## Description

### TECHNICAL FIELD

The present disclosure relates to heavy-duty dust extraction devices for use with construction equipment in order to process, e.g., concrete and stone. There are disclosed pre-filter arrangements, valve arrangements and other devices for cleaning a pre-filter in the dust extractor.

### BACKGROUND

Dust and slurry are created by cutting, drilling, grinding, shot blasting and/or demolishing concrete, brick, and other hard construction materials. The dust and slurry may be collected by a dust extractor and removed from the construction site in a controlled manner. Dust extractors normally collect the dust and slurry by generating a vacuum by means of an impeller and motor arrangement, i.e., similar to a vacuum cleaner for domestic use. Many industrial grade dust extractors comprise a pre-separator or cyclone device with a pre-filter designed to capture most of the dust, followed by an essential filter such as a high-efficiency particulate air (HEPA) filter to capture remaining finer dust particles.

As the filters accumulate particulate matter, the air flow through the dust extraction system is obstructed, eventually leading to decreased dust extraction efficiency. To mitigate this decrease in efficiency, at least the pre-filter can be regularly purged of dust and slurry by temporarily reversing the air flow through the filter.

US 7,082,640 B2 describes a dust extractor with a filter cleaning function.

WO 2021/088172 A1 describes another dust extractor with a similar function.

Still, there is a need for improved pre-filter arrangements which allow more efficient dust extraction.

### SUMMARY

It is an objective of the present disclosure to provide improved pre-filter arrangements for industrial grade dust extractors which alleviate at least some of the above-mentioned issues.

This object is obtained by a pre-filter for a heavy-duty dust extractor. The pre-filter comprises a filter aperture and a filter side wall, where the side wall is arranged to permit a flow of air to pass the side wall and to prevent at least some particulate matter from passing the side wall. The filter side wall extends away from the filter aperture and tapers inwards towards a center axis of the filter to define a filter interior volume. The pre-filter is arranged to hold a separating wall in position in the filter interior volume to divide the filter interior volume and optionally also the filter aperture in at least two parts.

This way two separate filter parts, or chambers are formed within the same side wall which is an advantage since a space saving arrangement is obtained which is also more easily serviced. It is an advantage that the side wall of the filter tapers inwards towards the center of the filter, since this means that gravitational pull helps to dislodge particles from the filter side wall during filter cleaning using a reverse thrust of air. The filter side wall may for instance have a conical, a frustoconical, a pyramidal, or a frustopyramidal shape. The filter side wall preferably forms an angle with respect to a central axis of the pre-filter that is between 10-30 degrees, and preferably about 20 degrees. In some cases the separating wall does not extend all the way up to the filter aperture. In such cases a matching section of wall can be configured extending into the pre-filter from a lid of the dust extractor.

According to some aspects, a first resilient seal extends around the rim of the filter aperture and a second resilient seal is formed on an edge of the separating wall dividing the filter aperture in at least two parts. This means that air conduits can be integrated in the lid of a dust extractor in an efficient manner, since portions cooperating with the seals can be formed in the lid.

The pre-filter separating wall can be fixedly attached in the filter interior volume. Alternatively, the pre-filter may comprise a groove or other attachment mechanism arranged to receive and to releasably hold the separating wall in position in the filter interior volume. This is an advantage since it means that different types of separating walls can be used with the same pre-filter base structure. By replacing the sidewall structure, the number of internal chambers can be adapted to fit a given dust extractor. For instance, some dust extractors may require a single pre-filter internal chamber, while other dust extractors may require two or more internal pre-filter chambers. The examples discussed herein mainly relate to a dust extractor with two pre-filter internal chambers, although it is appreciated that the pre-filters are not limited to any particular number of internal filter chambers. Some aspects of the teachings herein are also applicable to pre-filter systems comprising two or more separate pre-filters arranged in the same pre-separator tank.

The filter aperture, i.e., the main filter opening, may be of disc shape and the separating wall can be planar to divide the filter interior volume and in this case also the filter aperture in a first and a second half-disc parts. The height of the filter measured along the center axis may be between 300-400mm, and preferably about 345mm. The thickness of the filter side wall is preferably between 20-40mm, and more preferably about 30mm.

Dust extractors comprising the pre-filter arrangement are also disclosed herein. Some of these dust extractors comprise a hatch mechanism with an aperture having a perimeter, and at least three elongated obturator elements which are pivotably attached along the perimeter at respective hinge ends. Each obturator element has a distal end arranged opposite to the hinge end along the extension direction of the obturator element. Adjacent obturator elements arranged along the perimeter are connected by foldable joining members arranged to guide the distal ends to a common intersection point distanced from a plane of the aperture, whereby the obturator elements are arranged to fold about the respective hinge ends to a position of mutual support to close the hatch mechanism. This hatch mechanism has proven particularly suitable for use with the pre-filters and the valve arrangements for cleaning the pre-filters that will be discussed in more detail below. The hatch mechanism is relatively pliable and not prone to damaging dust container bags. The hatch opens up easily to allow accumulated dust to be evacuated from the pre-separator tank, which is an advantage.

There are also disclosed pre-filters comprising a rotation guide member arranged to guide an axial rotation of the pre-filter when inserted in a dust extractor. These pre-filters are more difficult to insert into a dust extractor pre-separator with the wrong rotation about the center axis of the filter. The rotation guide member is particularly suitable for use with filters with more than one part, as discussed herein, since the separating wall inside these filters may be important to align at the intended rotation.

The rotation guide member may for instance comprise a protrusion arranged to engage a corresponding recess on the dust extractor, a recess or notch arranged to engage a corresponding protrusion on the dust extractor and/or a visual indication of pre-filter rotation about a center axis (260) of the pre-filter.

A dust extractor comprising the above-mentioned type of pre-filter with the rotation guide member and a lid arranged to be prevented from entering into a closed position if the pre-filter is not correctly rotated to an intended rotation about the center axis is beneficial since it prevents incorrect use of the dust extractor, i.e., it is not possible or at least difficult for an operator to use the dust extractor unless the pre-filter is correctly installed.

Some of the above-mentioned deficiencies in the art may also be alleviated by a valve arrangement configured to generate a reverse flow of air, preferably a pulse of air, to clean a pre-filter for a heavy-duty dust extractor. The arrangement comprises a main valve closure body arranged to move between a first position which is a suction position and a second position which is a pre-filter cleaning position, where, in the first position, the main valve closure body is arranged to seal a passage between an ambient pressure side and a low pressure side of the valve arrangement, and where, in the second position, the main valve closure body is arranged to seal a passage between the low pressure side of the valve arrangement and a suction conduit while opening up the passage between the ambient pressure side and the low pressure side of the valve arrangement to let a burst of air run in reverse through the pre-filter in order to dislodge dust from the pre-filter wall. The valve arrangement further comprises a control body, connected to the main valve closure body, such that a position of the main valve closure body is determined by a position of the control body, a control chamber that is partially defined by the control body, whereby a volume of the control chamber is variable in relation to the position of the control body, and a control chamber valve having an open state and a closed state for regulating a pressure in the control chamber, wherein the state of the control chamber valve is determined by a trigger device. Thus, an efficient mechanism for cleaning a pre-filter is provided, which is able to seal a suction conduit during cleaning, allowing the suction through another pre-filter to continue during the pre-filter cleaning period (due to the closing of the passage between the low pressure side of the valve arrangement and the suction conduit). The mechanism is operated on the principles of pressure differences, which means that no strong actuators are required to overcome the pressure differences in the system. The valve arrangement is fast in the sense that it is able to open up quickly in order to generate the reverse thrust of air, which is an advantage since it improves the filter cleaning effect.

The reverse flow of air generated in this manner to clean the filter pushes accumulated dust away from the filter wall, thereby cleaning the filter. The reverse flow of air is preferably abrupt and of a pulse-like nature, but it may in some cases persist for a few seconds, in most cases below 10-15 seconds.

According to some aspects, the control chamber is fluidly connected to the low pressure side via a connecting channel configured with a connecting channel aperture, and the control chamber valve is configured with an aperture larger than the connecting channel aperture such that the control chamber valve is arranged to overcome the connecting channel when in the open state.

The trigger device may also comprise a manual control device arranged to force the control chamber valve into the open state, such as a button, a switch, or the like. This way a simple and efficient triggering device is provided. The trigger device may also, in combination with the manual trigger or as an alternative, comprise an electrically actuated control device arranged to force the control chamber valve into the open state in response to a wired or wireless control signal. This electrically actuated control device can be used to automate the cleaning process, which is an advantage. For instance, the electrically actuated control device may comprise an electromagnet arranged to engage a magnetic material member such as iron or a permanent magnet on a control lever attached to the control chamber valve, i.e., a solenoid arrangement, in order to provide an efficient and responsive triggering mechanism. Specific advantages are obtained if the magnetic material member is a permanent magnet having a polarity, in which case the electromagnet can be configured to reverse polarity to attract and repel the magnetic material member. This way magnetic force can be used both to open and to close the control valve in a rapid manner, which is an advantage. The electrically actuated control device is advantageously enclosed by some type of seal in order to prevent foreign particles from coming into contact with the parts of the control device, such as metal dust accumulating on the electromagnet and/or on the permanent magnet.

The control chamber valve is preferably configured with an aperture area which is at least twice the aperture area of the connecting channel aperture, in order to allow efficient actuation of the valve. The control chamber valve can for instance be configured with a circular aperture with a diameter between 10-20 mm and preferably about 15 mm. The connecting channel may be configured with a circular aperture with diameter between 2-5 mm, and preferably between 3-4 mm.

The dust extractors discussed herein preferably comprise at least a first and a second valve arrangement, and a control unit arranged to actuate the trigger devices of the first and the second valve arrangement. The control unit is arranged to alternate between actuating the trigger device of the first valve arrangement and the second valve arrangement. Thus, the control unit can be configured to automate the filter cleaning, by repeatedly alternate between cleaning the different parts of the pre-filter arrangement, thereby maintaining suction through the system at all times and prolonging operating time of the dust extractor system since the pre-filters are regularly cleaned. The various techniques involving the first and second valve arrangements may be advantageously combined with the split pre-filter discussed above, but can also be used with separate pre-filters arranged in the same pre-separator tank, i.e., one pre-filter for each valve arrangement.

The control unit may also be arranged to actuate the trigger device of the first valve arrangement and the second valve arrangement simultaneously, i.e., with some overlap in time, in response to a pre-separator dump signal. This causes the pressure inside the pre-separator tank to increase rapidly, causing the hatch mechanism of the pre-separator tank to open in a controlled manner, whereby the dust extractor pre-separator tank is emptied into a dust container in an efficient manner.

Particularly efficient emptying of the dust extractor pre-separator tank is obtained if the dust extractor comprises a hatch mechanism with an aperture having a perimeter, and at least three elongated obturator elements pivotably attached along the perimeter at respective hinge ends. Each obturator element comprises a distal end arranged opposite to the hinge end along the extension direction of the obturator element. Adjacent obturator elements arranged along the perimeter are connected by foldable joining members arranged to guide the distal ends to a common intersection point distanced from a plane of the aperture, whereby the obturator elements are arranged to fold about the respective hinge ends to a position of mutual support to close the hatch mechanism.

There is also disclosed herein a dust extractor lid for a heavy-duty dust extractor. The lid comprises a valve arrangement configured to generate a reverse flow of air, preferably a pulse of air, to clean a pre-filter of the heavy-duty dust extractor. The dust extractor lid extends in a lid plane and the valve arrangement comprises a main valve closure body arranged to move between a first position and a second position, in a direction transversal to or even normal to the lid plane, where, in the first position, the main valve closure body is arranged to seal a passage between an ambient pressure side and a low pressure side of the valve arrangement, and where, in the second position, the main valve closure body is arranged to seal a passage between the low pressure side of the valve arrangement and a suction conduit. This arrangement is both efficient in terms of filter cleaning capability and at the same time compact, which is an advantage. Herein, "transversal to" may be interpreted in some cases as between 45-90 degrees relative to the lid plane, where 90 degrees relative to the plane is normal to the lid plane.

The suction conduit is preferably arranged on a pre-filter side of the lid plane, and comprises a seat against which the main valve closure body is arranged to seal the passage between the low pressure side of the valve arrangement and the suction conduit. In this case the main valve closure body separates the seat from the lid plane. By arranging the suction conduit on the pre-filter side of the lid plane, or even inside the pre-filter volume, a spatially efficient design is obtained. The suction conduit may extend beyond an aperture plane of the pre-filter.

The present disclosure also relates to a dust extractor comprising at least a first and a second valve arrangement as well as a pre-filter system with at least a first part and a second part, where the first valve arrangement is associated with the first part of the pre-filter system and the second valve arrangement is associated with the second part of the pre-filter system. Each valve arrangement is configured to generate a reverse flow of air to clean the associated part of the pre-filter system, in response to actuation of a respective trigger device configured to place the valve arrangement in a pre-filter cleaning position. Actuation of the valve trigger devices can be performed with time overlap to simultaneously place the first and second valve arrangements in respective pre-filter cleaning positions. This way a particularly strong pre-filter cleaning effect is obtained which also causes dust held in the pre-filter tank to be dumped into a dust container beneath the tank. Thus, by allowing the two valves to be opened simultaneously a dust dumping function is obtained. The pre-filter system may comprise a single pre-filter split into first and second parts, or separate pre-filters arranged in the same pre-separator tank.

The dust extractor optionally comprises a control unit and the trigger devices may comprise electrically actuated control devices. In this case the control unit can be arranged to actuate the respective trigger devices of the first and the second valve arrangement with said time overlap in response to a pre-separator dump signal. This way an automated dust dumping function can be realized in an efficient manner. The control unit may be arranged to synchronously actuate the respective trigger devices of the first and the second valve arrangement in response to the pre-separator dump signal, in order to optimize the efficiency of the dust dumping operation.

The dust extractor optionally comprises a control input device, such as a button or switch, arranged to generate the pre-separator dump signal that the control unit reacts to and performs an automated dump operation. This control input device allows an operator to trigger the dust dumping operation in case too much dust has accumulated in the filter tank. The operator may also use the control input device when the work task is nearing completion, in order to empty the filter tank from dust. The control unit can also be arranged to periodically generate the pre-separator dump signal in an automated manner, thus providing an automated dust dumping function which keeps the amount of dust in the filter tank within a desired span.

The trigger devices may of course also comprise manual control devices that allow manual actuation of the valve arrangements. The manual control devices can be used with or without a control unit and electronically actuated valve arrangements.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method or process disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

### BRIEF DESCRIPTION OF THE DRAWINGS

The present disclosure will now be described in more detail with reference to the appended drawings, where
Figures 1A-B show an example heavy-duty dust extractor;
Figures 2A-F schematically illustrate a pre-filter for a dust extractor;
Figures 3A-C show example pre-filters with different separating walls;
Figure 4 illustrates an example arrangement for pre-filter cleaning;
Figures 5A-B shows an example valve arrangement for pre-filter cleaning;
Figure 5C illustrates a pre-filter cleaning operation;
Figures 6A-B illustrate an example hatch mechanism in closed position;
Figures 7A-B illustrate an example hatch mechanism in open position;
Figure 8 shows an example control unit; and
Figure 9 schematically illustrates a computer program product;

### DETAILED DESCRIPTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description.

It is to be understood that the present invention is not limited to the embodiments described herein and illustrated in the drawings; rather, the skilled person will recognize that many changes and modifications may be made within the scope of the appended claims. In particular, the different valve arrangements discussed herein may be used with a wide variety of different types of dust extractors, not only the dust extractor designs used as examples.

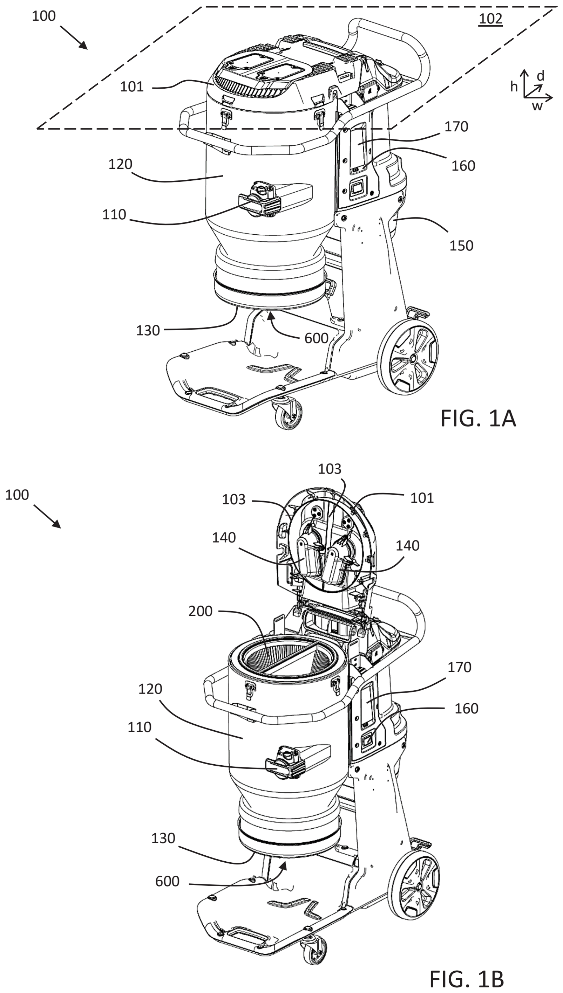

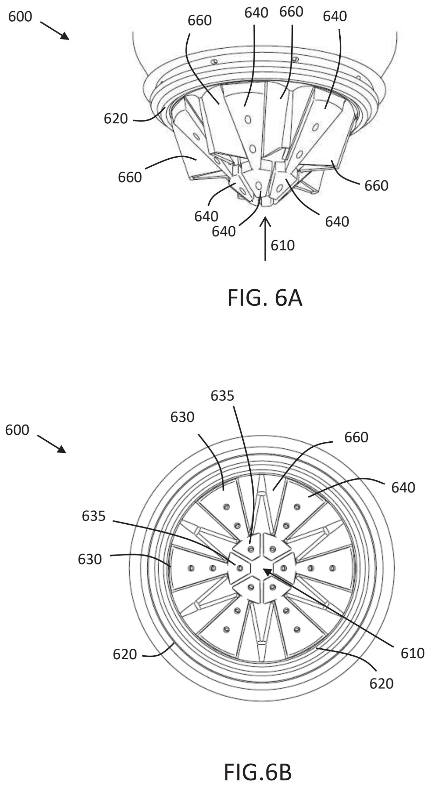

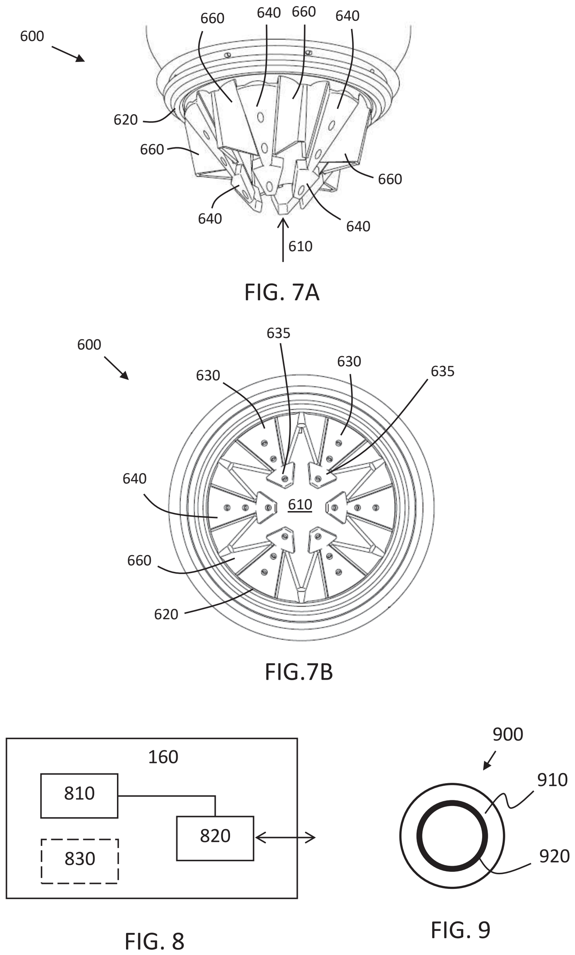

Figures 1A and 1B show an example dust extraction device 100. The dust extraction device can be connected via a hose to a dust generator (not shown in Figure 1), such as a core drill, a floor grinder, a concrete saw, or the like. The dust and slurry from the dust generator enters the dust extractor via an inlet 110. A pre-separator 120 is arranged after the inlet, i.e., downstream with respect to the airflow direction into the inlet 110. The pre-separator may comprise a cyclone with a pre-filter for separating out larger debris particles from the particle-laden airflow entering the inlet 110. The larger debris particles can then be collected via an outlet 130 of the pre-separator 120. A hatch mechanism 600, an example of which will be discussed in more detail in connection to Figures 6A-B and Figures 7A-B, is arranged to close the outlet 130 during operation, and to open in response to an increase in pressure in the pre-separator 120 in order for dust and slurry to be evacuated from the pre-separator 120. During normal operation, the pre-separator 120 captures a majority of the generated dust, which is then evacuated into a dust container such as a bag or a bucket (not shown in Figures 1A and 1B). Figure 1A also shows a dust extractor lid 101 which forms an upper portion of the dust extractor 100. The lid 101 is shown in an open service-position in Figure 1B, where the pre-filter 200 inside the pre-separator 120 is accessible. This example lid is essentially planar when in its closed position. This means that the lid 101 extends primarily in a lid plane 102, as illustrated in Figure 1A, and has a height h (measured in vertical direction when the dust extractor 100 is in the normal operating position as illustrated in Figures 1A and 1B) which is significantly smaller than its width w and depth d. An advantage of having a planar lid is that it does not add height to the dust extractor 100. It is noted that the lid is advanced in the sense that it comprises both valve arrangements for cleaning the pre-separator filter 200 as well as suction conduits 140 which is integrally formed with the lid. The valve arrangements and the suction conduit will be discussed in more detail below.

The pre-separator 120 may also be referred to as a cyclone, a cyclone tank, or a filter tank. As noted above, the hatch mechanisms 600 discussed herein are applicable with most dust extractors for industrial use and need not be arranged to seal a pre-separator. Rather, the hatch mechanisms can be used to seal any dust extractor filter tank structure.

The air flow continues from the pre-separator 120 via the one or more suction conduits 140 formed in the lid 101 into one or more essential filters (not shown in Figures 1A and 1B). An essential filter is a fine filter (finer than the pre-filter) designed to meet strict requirements on filtering function. Such an essential filter may, e.g., be a High-Efficiency Particulate Air (HEPA) filter, but other air filters may also be used. The term essential filter is commonly used in the technical field of wet and dry vacuum cleaners, see, e.g., European standard EN 60335-2-69, August 2012, where the term essential filter is used.

A blower arrangement 150 is arranged downstream from the pre-separator 120 and also downstream from the one or more essential filters. The blower arrangement generates a suction force or vacuum which draws the particle-laden airflow in through the inlet 110, past the pre-separator 120, and through the one or more essential filters. Herein, a vacuum or vacuum level indicates how far below a reference pressure level, such as atmospheric pressure, the pressure in the airflow is.

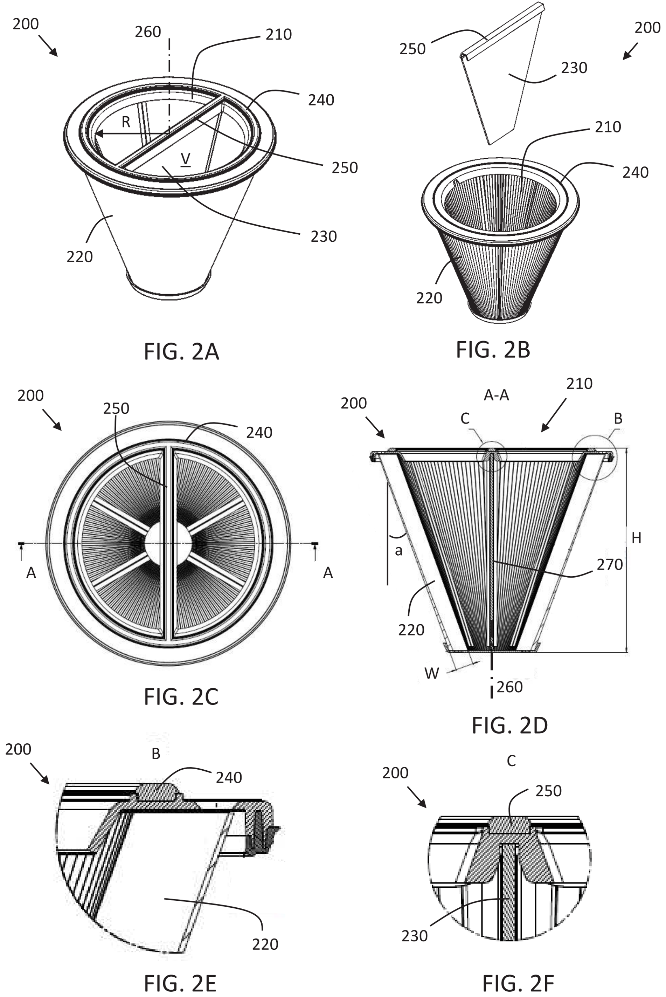

It is desired to regularly clean the pre-filter in the pre-separator. Mechanisms to achieve this using a reverse thrust of air are known. Some such mechanisms use more than one separate pre-filter, which allows one of the filters to be cleaned while the other filter is used to maintain suction through the inlet. The dust extractor 100 comprises a pre-filter 200 which is illustrated in more detail in Figures 2A-F. This pre-filter 200 comprises a filter aperture 210, i.e., an opening from which an air flow can exit the clean side of the filter, and a filter side wall 220. The side wall 220 is arranged to permit a flow of air to pass the side wall and to prevent at least some particulate matter from passing the side wall, i.e., the filter side wall is made in some form of filter material in a known manner. An air flow from the pre-separator 120 can enter from a contaminated side of the pre-filter 200 (outside the filter wall 220) to the clean side of the pre-filter (inside the filter wall 220), leaving most of the dust in the pre-separator where it can be collected in a dust container via the hatch mechanism 600. The pre-filtered air flow of reduced contamination then continues onwards to the essential filter or filters of the dust extractor 100, before it exits the dust extractor. Notably, the filter side wall 220 in the example pre-filter 200 extends away from the filter aperture 210 and tapers inwards towards a center axis 260 of the filter 200 to define a filter interior volume V. This tapering has an important technical effect in that it promotes filter cleaning. Dust which is stuck to the filter side wall and is subject to a reverse thrust of air, i.e., a thrust of air from the filter interior through the filter side wall to the filter exterior, will "fall off" the side wall due to gravitational pull if the filter is used in an up-right position (with the aperture facing vertically upwards). The filter side wall 220 may for instance have a conical or a frustoconical shape as exemplified in Figures 2A-D, which tapers inwards towards the filter center, although other tapered shapes are also possible. A pyramidal or frustopyramidal shape would also have a similar technical effect. Thus, the pre-filters 200 disclosed herein are different from cylindrical side-wall pre-filters, where the side walls do not taper inwards but extend in the vertical direction. Here, vertical direction relates to the position of the pre-filter 200 in use as illustrated in Figure 1B, where the filter aperture 210 faces upwards in the vertical direction.

The filter side wall 220 preferably forms an angle a, illustrated in Figure 2D, with respect to a central axis of the pre-filter 260 between 10-30 degrees, and preferably about 20 degrees.

The pre-filter 200 is also arranged to hold a separating wall 230 in position in the filter interior volume V to divide the filter interior volume V and optionally also the filter aperture 210 in at least two parts. The example separating wall in Figures 2A-D divides the filter interior volume V in two equal halves, effectively creating a dual filter function from a single filter unit. This is an advantage, since there is only one filter to maintain and to replace, compared to if separate filters had been used, which is commonly seen in the art. Due to the side wall 230, a reverse thrust of air can be generated in one filter half, without affecting the air flow through the other filter half. This way the two filter halves can be cleaned in an alternating fashion, one after the other, while maintaining dust extraction operation, which is an advantage. It is easier to remove the pre-filter 200 compared to if two or more separate filters had been used. In the case where the side wall does not divide the filter aperture in at least two parts, e.g., because the side wall does not extend all the way up to the aperture, a complementary separating wall can be arranged in the lid of the dust extractor to extend down into the pre-filter to engage the side wall.

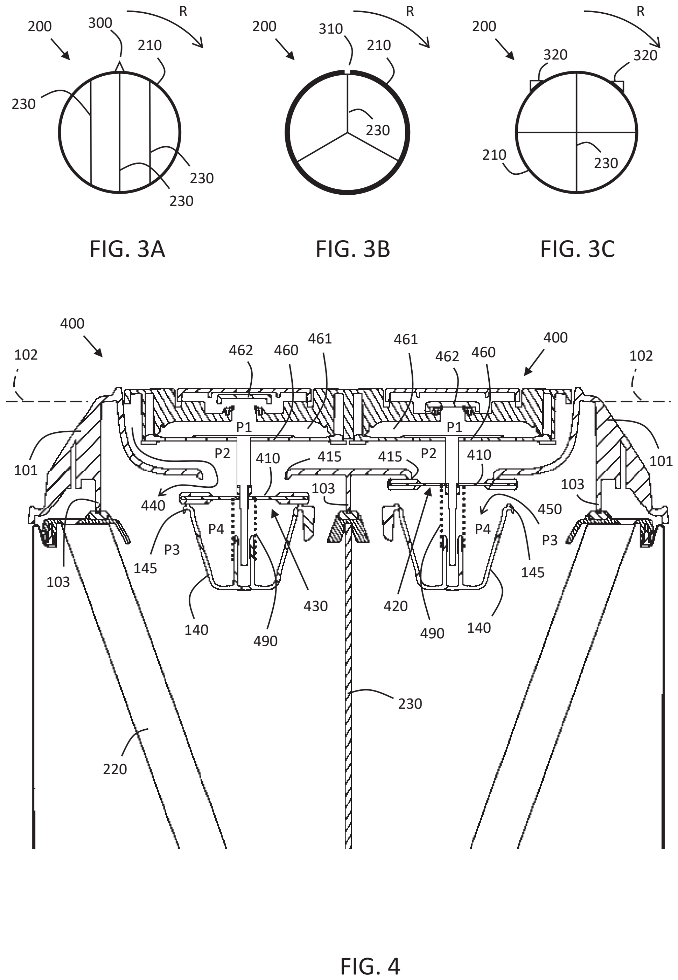

It is noted that side walls can be configured to divide the pre-filter interior into more than two parts, thereby obtaining a filter with an interior filter volume that is divided into two or more sections, i.e., two or more chambers enclosed by the same side wall 220. Some example side walls are illustrated in Figures 3A-C, where the example side wall configuration in Figures 3A and 3B divides the pre-filter interior into three parts, and the example in Figure 3C divides the pre-filter interior into four parts. The parts need not be of equal volume, although it may be preferred to keep an equivalent filtering characteristic in all parts, i.e., an air permeability which is about the same for all parts. It is noted that different shaped side walls can be used with the same base side-wall. This way the number of filter interior parts can be adjusted in dependence of the dust extractor. Some dust extractors may be designed for use with a single pre-filter in which case no side-wall is used.

The pre-filter 200 optionally comprises a rotation guide member 300, 310, 320 exemplified in Figures 3A-C. This rotation guide member is arranged to guide an axial rotation R (about the center axis 260) of the pre-filter 200 when inserted in a dust extractor 100, such that, e.g., the resilient seals on the pre-filter correctly engage matching portions 103 of the lid 101 to form an airtight pre-separator tank 120, including separated pre-filter parts. In other words, the rotation guide member 300, 310, 320 on the pre-filter 200 ensures that the filter is correctly rotated such that the different filter parts and seals line up correctly. The rotation guide member can be realized in different ways, such as a protrusion in the filter rim 300, a notch or recess formed in the filter rim 310, or cats ears 320 formed on the filter exterior. A visual indication is also possible, i.e., a mark on the pre-filter 200 which indicates its rotation about the center axis 260. This mark can then have a matching mark formed on the dust extractor 100, such that a correct rotation of the pre-filter can be ensured.

The dust extractor lid 101 can also be designed such that it cannot be closed unless the pre-filter has the correct rotation. This can be achieved in a number of different ways. For instance, a protrusion can be arranged on the pre-filter which prevents the pre-filter from being inserted all the way into the receiving portion of the pre-separator 120. The pre-filter will then interfere with the lid and prevent it from closing unless the protrusion has entered into the matching recess formed in the dust extractor 100, allowing the pre-filter to be fully received in the pre-separator 120 of the dust extractor 100. This type of arrangement is often referred to as poka-yoke feature since it prevents erroneous handling of the filter equipment.

The separating wall 230 may in some cases be subject to relatively large forces, in particular during filter cleaning when the pressures in the different parts of the pre-filter change rapidly. The separating wall 230 therefore optionally comprises a re-enforcement structure configured to resist deformation of the separating wall 230, such as ribs and/or some form of honey-comb structure.

According to some aspects, portions of the filter side wall 220 associated with the at least two parts have different filter characteristics. This means that the part of the filter side wall delimiting the first part of the pre-filter has a different filter characteristic from a part of the filter side wall that delimits a second part of the pre-filter. One pre-filter part can, for instance, be configured to be more easily cleaned compared to another filter part. One filter part can also have a higher permeability than the other filter part. According to some aspects, a first resilient seal 240 extends around a rim of the filter aperture 210 and a second resilient seal 250 is formed on an edge of the separating wall 230 dividing the filter aperture 210 in at least two parts. These resilient seals engage matching portions 103 of the lid 101 to form an airtight pre-separator tank 120. Thus, once the lid 101 is in its closed position, the pre-filter 200 acts as two separate filters, where one pre-filter part can be cleaned at a time without significantly affecting the operation of the other pre-filter part.

According to one example the separating wall 230 is fixedly attached in the filter interior volume V. In other words, the separating wall 230 may be integrally formed with the rest of the pre-filter 200, preferably in a non-air-permeable material such as plastic. However, the separating wall can also allow some small amount of air to pass between the different pre-filter sections, without significantly affecting the function of the overall dust extraction system.

According to another example the pre-filter 200 comprises a groove 270 arranged to receive and to releasably hold the separating wall 230 in position in the filter interior volume V. This means that the pre-filter can be used as a single chamber filter (by removing the separating wall) or as a filter with more than one internal chamber, depending on the use-case. Thus, the same filter can be used with more than one type of dust extractor, which is an advantage. The separating wall, being made in a non-air-permeable material, can of course be re-used for more than one pre-filter.

The filter aperture 210 of the example pre-filter 200 illustrated in Figures 2A-F is of disc shape and the separating wall 230 is planar. This means that the separating wall divides the filter interior volume V in two parts, and the filter aperture 210 in a first and a second half-disc part.

Figure 2D illustrates some example dimensions for a pre-filter suitable for a heavy-duty dust extractor. According to this example, the height H of the filter measured along the center axis 260 is between 300-400mm, and preferably about 345mm. The thickness W of the filter side wall 210 is between 20-40mm, and preferably about 30mm.

Figure 4 shows an example valve arrangement for a dust extractor 100 comprising the pre-filter 200. It is, however, also noted that the same valve arrangement can be used in a design with a plurality of separate pre-filters, such as two or more separate cylindrical pre-filters arranged in the same pre-separator tank.

In this arrangement, two separate valves 400 are configured in respective parts of the pre-filter 200 to clean the filter parts. The spatially efficient configuration of the valves and the suction conduits 140 is particularly noted. Each valve arrangement 400 is integrated in the lid 101, and extends into the dust extractor interior away from the lid plane 102. The suction conduits 140 are formed at least partly in the pre-filter interior volumes V, thus saving overall dust extractor height.

Each valve arrangement 400 is configured to generate a reverse flow of air to clean a respective part of the pre-filter 200. It is, however, appreciated that the valve arrangements can be used individually also, i.e., to clean pre-filter arrangements in dust extractors which only comprises a single pre-filter, or a pre-filter without a separating wall. Each of the valve arrangements 400 exemplified in Figure 4 comprises a main valve closure body 410 arranged to move between a first position 420 and a second position 430, where, in the first position 420, the main valve closure body 410 is arranged to seal a passage 440 between an ambient pressure P2 side and a low pressure P3 side of the valve arrangement 400, and where, in the second position 430, the main valve closure body 410 is arranged to seal a passage 450 between the low pressure P3 side of the valve arrangement 400 and a suction conduit 140, P4. In this example the first position 420 is associated with a seat 415 against which the main valve closure body 410 seals the passage 440 between the ambient pressure P2 side and the low pressure P3 side of the valve arrangement 400, while the second position 430 is associated with a seat 145 against which the main valve closure body 410 seals the passage( 450 between the low pressure P3 side of the valve arrangement 400 and the suction conduit 140. Note how the suction conduit 140 is arranged at least partly inside the pre-filter interior, and how the seat 145 for the main valve closure body is formed at the opening of the suction conduit 140, to form a space saving arrangement.

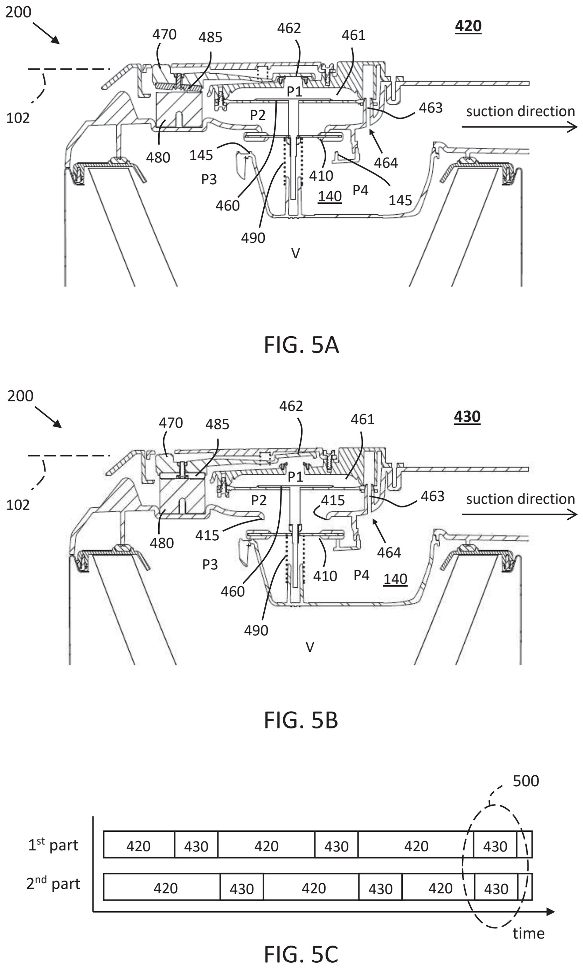

With reference to Figures 1A-B, Figure 4, and to Figures 5A-B, there is disclosed herein a dust extractor lid 101 for a heavy-duty dust extractor 100, comprising a valve arrangement 400 configured to generate a reverse flow of air to clean a pre-filter 200 of the heavy-duty dust extractor 100, where the dust extractor lid 101 extends in a lid plane 102. The valve arrangement 400 is integrated in the lid 101 and comprises a main valve closure body 410 arranged to move between a first position 420 and a second position 430, in a direction transversal or even normal to the lid plane 102, where, in the first position 420, the main valve closure body 410 is arranged to seal a passage 440 between an ambient pressure P2 side and a low pressure P3 side of the valve arrangement 400, and where, in the second position 430, the main valve closure body 410 is arranged to seal a passage 450 between the low pressure P3 side of the valve arrangement 400 and a suction conduit 140, P4.

With reference to, e.g., Figures 5A-B, the suction conduit 140 is arranged on a pre-filter side of the lid plane 102, i.e., the plane in which the dust extractor lid 101 extends. The suction conduit 140 comprises a seat 145 against which the main valve closure body 410 is arranged to seal the passage 450 between the low pressure P3 side of the valve arrangement 400 and the suction conduit 140. To seal the passage, the main valve closure body 410 is moved downwards, away from the lid plane 102 and towards the seat 145. Thus, the main valve closure body 410 separates the seat 145 from the lid plane 102 and also from most other parts of the lid 102.

It is also noted that the suction conduit 140 extends beyond an aperture plane of the pre-filter 200, i.e., into the pre-filter 200. This provides for a particularly efficient design in terms of building height, i.e., it is a space-conserving way to construct a lid 101 for a heavy-duty dust extractor 100.

The valve arrangement 400 also comprises a control body 460, connected to the main valve closure body 410, such that a position of the main valve closure body 410 is determined by a position of the control body 460. In other words, if the control body 460 moves, so does the main valve closure body 410. Note that this motion is vertical in the normal operating position, or normal with respect to a plane of the main valve closure body 410, but this exact configuration is not strictly necessary for the arrangement to function. The position of the main valve closure body 410 can be determined by the position of the control body 460 is many different ways, e.g., via a lever arrangement, via wire, or by some other form of mechanical linkage. An electric or electromechanical control actuator can also be used to control the position of the control body 460, such as a solenoid or electromagnet. A resilient member, such as a spring 490, can be arranged to bias the main valve closure body 410 into the first position 420.

The mechanism in Figure 4 uses differential air pressure to actuate the valve mechanism. In the example of Figure 4, a control chamber 461 is partially defined by the control body 460, and a volume of the control chamber 461 is variable in relation to the position of the control body 460. There is also a control chamber valve 462 having an open state and a closed state for regulating a pressure P1 in the control chamber. Thus, by a change of pressure in the control chamber, the control body can be made to move, which will cause a corresponding motion of the main valve closure body 410. The state of the control chamber valve 462 is determined by a trigger device 470, 480, which will be discussed in more detail below.

In the example of Figure 4 and Figures 5A-B, the control chamber 461 is a space which is sealed by a resilient membrane which is able to move up and down to restrict or expand the volume of the control chamber (although this is not accurately represented in the drawings). The volume of the control chamber 461 is therefore variable in relation to the position of the control body 460. Other ways to implement this type of control chamber would, e.g., comprise a cylinder and piston arrangement, or a balloon arrangement.

With reference to Figure 4, if the pressure P1 inside the control chamber 461 is smaller than pressure P2 outside the control chamber 461, the control body 460 will move to restrict the volume in the control chamber 461. This motion also pulls the main valve control body 410 into the sealing position 420, since a smaller counter-force acts on the main valve control body 410 due to the pressure difference between the low pressure P3 side and the high pressure P2 side.

When the control chamber valve 462 is opened to increase pressure in the control chamber 461, e.g., from a machine operating pressure to atmospheric pressure, the main valve control body is shifted into the non-sealing position 430, and now instead seals the suction conduit, at least in part due to being sucked against the aperture of the suction conduit (since the pressure P4 is smaller than the pressure P3). The effective area of the control body 460 may be arranged larger than an effective area of the main valve control body 410.

According to some aspects, the control chamber 461 is fluidly connected to the low pressure P3 side via a connecting channel 463 configured with a connecting channel aperture 464, and the control chamber valve 462 is configured with an aperture larger than the connecting channel aperture 464 such that the control chamber valve 462 is arranged to overcome the connecting channel 463 when in the open state.

The valve arrangement 400 illustrated in Figures 5A-B also differs from known valve arrangements in how the pressure P1 in the control chamber 461 is regulated to trigger the air pulse for cleaning the air filter. The valve arrangement 400 comprises a connecting channel 463 which fluidly connects the control chamber 461 to the low pressure P3 side. The connecting channel 463 is a relatively narrow conduit which extends from the low pressure P3 side into the control chamber 461 (the connecting channel aperture 464 opens up into the control chamber 461 as can be inferred from, e.g., Figure 10A).

Thus, air is constantly drawn out from the control chamber 461 towards the low pressure P3 side via the connecting channel 463 when the dust extractor is in use. A low pressure is thereby generated in the control chamber 461 as long as the control chamber valve 462 is in the closed state. The control chamber valve 462 is configured with an aperture that is larger than the aperture 464 of the connecting channel 463, which means that the control chamber valve is arranged to overcome the connecting channel aperture 464 when in the open state. In this context, "to overcome" means that the pressure inside the control chamber increases if the control chamber valve 462 is open despite the fact that the connecting channel 463 constantly connects the control chamber to the low pressure P3 side. It is noted that the connecting channel 463 is not closed when the air pulse is triggered, which means that no complex three-way valve or the like is required as in WO 2017/025305.

For example, the diameter of the aperture of the control chamber valve 462 may be on the order of 15mm for a circular aperture, which means that the area is about 175 mm². This large aperture easily overcomes an aperture of the connecting channel 464 which may be on the order of 3-4 mm in diameter for a circular aperture corresponding to an area of 7-13 mm².

It is appreciated that the apertures of the control chamber valve 462 and the connecting channel 464 need not be circular, or even regular in shape. It is the aperture area which is important in order for the control chamber valve 462 to be able to overcome the connecting channel 464. An aperture of the control chamber valve 462 which is about two times larger in area may be sufficient, although a larger difference may be preferred, such as ten times larger or more. The larger the difference in aperture is, the faster the response is to the trigger. However, a too large control chamber valve aperture may result in structural difficulties.

When the control chamber valve 462 enters the open state the pressure in the control chamber rapidly increases due to the open connection to atmospheric pressure, i.e., the pressure inside the control chamber quickly goes from a machine operating pressure to atmospheric pressure. The effect of the connecting channel in reducing pressure is overcome, and the main valve control body is therefore shifted into the non-sealing position 430 whereby the reverse flow of air, preferably the pulse of air, is generated to clean the filter.

The trigger device may comprise a manual control device 470 arranged to force the control chamber valve 462 into the open state, such as the button illustrated in Figures 5A and 5B. This button can be used to trigger filter cleaning on-demand in a convenient manner.

Referring back to Figure 1, the dust extractor 100 may also comprise a control unit 160 configured to perform various control actions, such as monitoring pressure levels at various places in the dust extractor 100 and controlling the blower arrangement 150. The control unit 160 may also be configured to control one or more valve arrangements of the dust extractor, as will be discussed in the following. A display unit 170 can be configured as a means for interacting with a user of the dust extractor. This display unit 170 may comprise input means for allowing a user to trigger various functions on the dust extractor, such as to trigger a pre-filter cleaning procedure or to trigger a pre-filter dumping procedure where dust and slurry is evacuated from the pre-separator 120 and into a dust container underneath the pre-separator. The dust extractor may also comprise dedicated control input devices which are connected to the control unit 160 by wire or wirelessly. There may, e.g., be a dust dump command button or switch, a filter cleaning button or switch, and so on.

According to some aspects, the trigger device comprises an electrically actuated control device 480 arranged to force the control chamber valve 462 into the open state in response to a wired or wireless control signal. In the example of Figure 5A and 5B, this electrically actuated control device 480 is an electromagnet arranged to engage a magnetic material member 485 (such as iron, steel, or a permanent magnet) on a control lever attached to the control chamber valve 462, i.e., a solenoid arrangement. In this manner a control current can be made to flow in the electromagnet, whereby the magnetic material member 485 is pulled towards the electrically actuated control device 480 to operate the lever which in turn opens up the control chamber valve 462.

According to some aspects, the electrically actuated control device 480 (and the magnetic material member 485 if it exists) are sealed from the rest of the dust extractor and in particular from the ambient environment by a seal. Thus, optionally, the electrically actuated control device 480 is enclosed by a seal arranged to prevent foreign particles from the ambient environment and from the pre-separator tank from reducing performance of the control device or even causing malfunction. This seal, e.g., prevents foreign particles such as iron dust from entering in between the electrically actuated control device 480 and the magnetic material member 485, which reduces the performance of the control device 480. The seal may comprise bellows or the like that encloses the electrically actuated control device 480 and the magnetic material member 485, or a cylinder defining an interior sealed volume in which the control device 480 operates. A hermetically sealed solenoid can of course also be used as the electrically actuated control device 480, where the seal is integrated in the control device.

The magnetic material member 485 may as noted above be made of iron or steel. However, further advantages can be obtained if a permanent magnet having a polarity is used. In this case the electromagnet may be configurable to reverse polarity to attract and repel the magnetic material member 485. This causes the opening and closing of the control chamber valve 462 to be more snappy, since its opening will be rather fast due to the attraction force between electromagnet and permanent magnet. The closing of the control chamber valve 462 will also be rapid, due to the repulsive force between electromagnet and permanent magnet as the current in the electromagnet is reversed. A two-way solenoid can of course also be used with the same technical effect.

As mentioned above, the low pressure P3 side may be associated with a pressure in an internal volume V of the pre-filter 200, and the ambient pressure side P2 is associated with atmospheric pressure. The pressure in the suction conduit 140 is normally below the pressure in the low pressure P3 side, especially during filter cleaning. The control chamber valve 462 is preferably configured with an aperture area which is at least twice the aperture area of the connecting channel 464 aperture. For example, the control chamber valve 462 can be configured with a circular aperture with a diameter between 10-20 mm and preferably about 15 mm, and the connecting channel 464 may have a circular aperture with diameter between 2-5 mm, and preferably between 3-4 mm.

Some of the dust extractors described herein comprise more than one pre-filter chamber, i.e., two or more separate pre-filters or a pre-filter with more than one internal chamber as illustrated in Figures 2A-D. This is primarily because pre-filter systems with more than one filter chamber allows one filter chamber to be cleaned while to other is used to maintain suction through the inlet 110. Another advantage of using two or more pre-filter chambers in order to maintain suction even during filter cleaning is that it becomes less likely that fine dust escapes from the essential filters during the turbulence that may result from pre-filter cleaning.

With reference also to Figure 5C, the dust extractor 100 preferably comprises at least a first and a second valve arrangement 400, and a control unit 160 arranged to actuate the trigger devices 480 of the first and the second valve arrangement. The control unit 160 is arranged to alternate between actuating the trigger device 480 of the first valve arrangement and the second valve arrangement. This means that one of the cleaning valves is actuated first (placing its respective main valve closure body 140 in the second position 430), followed by the other, and then the first again. The periodicity of the cleaning actuations may differ in-between machines, and normally both filter chambers are operated in parallel. The filter cleaning operation may also comprise placing both valve arrangements in the second position, i.e., the pre-filter cleaning position, as illustrated in Figure 5C by the operation 500 towards the end of the time axis. In this case both parts of the pre-filter 200 are opened up to atmospheric pressure, which means that the filter is cleaned, and also that the pressure inside the pre-separator tank increases. When this happens, a hatch mechanism such as the hatch mechanism 600 discussed below in connection to Figures 6A-B and Figures 7A-B opens up to evacuate accumulated dust and slurry into the dust container arranged below the hatch.

According to an example, the valve arrangements are intermittently placed in the pre-filter cleaning state, i.e., the second position where the main valve closure body is arranged to open the passage between the ambient pressure side and the low pressure side of the valve arrangement, for about 0,7-1,0 seconds and then in the first position (where the passage to ambient pressure is sealed) for about 15-20 seconds. It is generally desired to reduce the time spent by a valve in the second position since the passage to ambient pressure reduces the suction power of the dust extractor.

As mentioned above, the control unit 160 may also actuate the trigger device 470, 480 of the first valve arrangement and the second valve arrangement simultaneously, i.e., with at least some time overlap, in response to a pre-separator dump signal. This causes the pressure in both chambers of the pre-filter 200 to increase, which will increase the pressure in the separator tank. This increase will cause the hatch mechanism to open, and the dust collected inside the pre-separator tank will be evacuated into the dust container under the pre-separator. The pre-separator dump signal may be obtained from an operator via a control input device of some kind, such as a button. The pre-separator dump signal may also be generated automatically and internally by the control unit based on a timer or the like.

The operation 500 in Figure 5C where more than one valve arrangement is simultaneously placed in filter cleaning position 430 may as noted above be referred to as a dump operation. It is appreciated that the actuation of the trigger devices of the valve arrangements need not be synchronous. It is enough that the two or more valves are in their respective second positions with some overlap, such as with an overlap of more than 0,5 seconds, and preferably with an overlap between 0,5-1,0 seconds.

The dump operation function of the dust extractor 100 complements the other features discussed herein, but can also be useful on its own, without the other features discussed herein. In other words, there is disclosed herein a dust extractor 100 comprising at least a first and a second valve arrangement 400. These valve arrangements may be one of those valve arrangements discussed herein or some other type of filter cleaning valve arrangement known in the art. The dust extractor also comprises a pre-filter system with at least a first part and a second part arranged in the same pre-separator tank 120, where the first valve arrangement is associated with the first part of the pre-filter system and the second valve arrangement is associated with the second part of the pre-filter system. The pre-filter system may be of the split-filter type (with a single common side wall), e.g., as illustrated in Figures 2A-F or in Figures 3A-C, or comprise two or more separate pre-filter units, such as two conventional cylindrical pre-filters arranged in parallel and located in the same pre-separator tank 120.

Each valve arrangement 400 is configured to generate the type of reverse flow of air discussed above, which cleans the associated part of the pre-filter system. The reverse flow of air is generated in response to actuation of respective trigger devices 470, 480 configured to place the valve arrangement in a pre-filter cleaning position. Actuation of the trigger devices can be performed alternately where only one of the valves is used for filter cleaning, or with time overlap where both the first and the second valve arrangements are placed in their respective pre-filter cleaning positions, as illustrated in Figure 5C. The control unit 160 is preferably arranged to synchronously actuate the respective trigger devices 480 of the first and the second valve arrangement in response to the pre-separator dump signal, such that the valves open and close at approximately the same time, which yields a more effective dump operation. However, synchronous actuation of the valves is not necessary. In fact, asynchronous operation may be advantageous in some cases. Such as letting one valve stay open for a longer time period compared to the other valve, with overlap only occurring during a small time period of below 1s or so. For instance, both valves may initially be placed in the pre-filter cleaning positions 430, whereupon one of the valves may be controlled so as to revert to the first position 420 again. It is also possible to only control one of the valves into the pre-filter cleaning position 430 initially, and then control the other valve into the pre-filter cleaning position 430 to get the overlap for a shorter period of time. The control unit may alternate between the valve that stays open for the longer time period.

The trigger devices may comprise manual control devices 470 of the first and the second valve arrangement 400. These may be realized as buttons that are mechanically linked to the valves as exemplified in, e.g., Figure 5A and 5B.

The trigger devices may also comprise electrically actuated control devices 480, in which case the control unit 160 can be arranged to actuate the respective trigger devices 480 of the first and the second valve arrangement with time overlap 500 in response to a pre-separator dump signal.

According to some aspects, the dust extractor 100 comprises a control input device, such as a button or switch, arranged to generate the pre-separator dump signal. This way a user can manually operate the dust extractor to empty dust from the pre-separator tank into the dust container underneath. The control input device may be wired directly to the control unit 160, or form part of a human-machine interface (HMI) such as a display system or the like.

The control unit 160 is optionally arranged to periodically generate the pre-separator dump signal, such that the pre-separator tank is periodically emptied. The control unit 160 may also be configured to monitor pressure difference and/or pressure difference build-up between the ambient pressure P2 sides of the valve arrangements and the low pressure P3 sides of the valve arrangement 400, and trigger the dump operation 500 if the normal pre-filter cleaning operations are not efficient enough to clean the pre-filter 200.

The valve arrangements discussed herein are particularly suitable for use with the type of hatch mechanism 600 illustrated in Figures 6A-B and Figures 7A-B. This mechanism comprises an aperture 610 having a perimeter 620, and at least three elongated obturator elements 640 pivotably attached along the perimeter 620 at respective hinge ends 630. Each obturator element has a distal end 635 arranged opposite to the hinge end 630 along the extension direction of the obturator element 640. Adjacent obturator elements 640 arranged along the perimeter 620 are connected by foldable joining members 660 arranged to guide the distal ends 635 to a common intersection point distanced from a plane of the aperture, whereby the obturator elements 640 are arranged to fold about the respective hinge ends 630 to a position of mutual support to close the hatch mechanism 600.

The hatch mechanism 600 is generally an important part of the dust extractor 100. This hatch is used when emptying the pre-separator chamber into the dust container which is arranged below the hatch (but not shown in Figures 1A-B). The dust container may, e.g., be a removable box structure or a plastic bag, such as the Longopac^{®} bagging system mentioned above. If the hatch mechanism is used with a non-rigid plastic bag dust container system, it is important that the dust bag is not sucked into the pre-separator chamber via the hatch. However, this does not mean that the hatch needs to be air-tight during operation. This hatch mechanism can be made quite flexible, since many parts can be made in a soft material such as rubber. The soft hatch mechanism does not damage dust container bags, which is an advantage. Also, the hatch mechanism 600 has been shown to open up as the pre-filter chambers are cleaned by actuation of the valve arrangements discussed above, which is an advantage since it keeps the amount of generated dust in the pre-separator tank low at all times.

The present disclosure relates in part to hatch mechanisms which close to prevent the dust container from being sucked into the pre-separator during operation, while at the same time allowing for easy emptying of dust into the dust container.

With reference to Figures 6A-B and Figures 7A-B, the mechanism comprises an aperture 610 having a perimeter 620 arranged in a plane. It is via this aperture that the accumulated dust and slurry is dumped into the dust container below the hatch mechanism. To empty the pre-separator chamber, the low operating pressure inside the chamber is first increased, e.g., by opening a conduit to outside atmosphere as during filter cleaning, or by turning off the blower arrangement 150. The plane can be defined freely to be some plane having the main emptying direction of the hatch as its normal. It is appreciated that the perimeter need not be perfectly aligned with the plane along the entire circumference.

At least three elongated obturator elements 640 are pivotably attached along the perimeter 620 at respective hinge ends 630. Each obturator element comprises a distal end 635 arranged opposite to the hinge end along the extension direction of the obturator element 640. This means that each obturator element is connected to the perimeter 620 in a way such that it can swing inwards with respect to the aperture.

Figures 6A-B show an example hatch mechanism 600 in closed position. Adjacent obturator elements 640 arranged along the perimeter 620 are connected by foldable joining members 660 arranged to guide the distal ends 635 to a common intersection point distanced from the aperture plane, whereby the obturator elements 640 are arranged to fold about respective hinge ends 630 to a position of mutual support to close the hatch mechanism 600. Thus, the obturator elements swing inwards to a position of mutual support, forming an upside-down cone- or pyramid-like structure where the distal ends meet at the pointy end. An obturator element 640 may, e.g., be realized by a rigid or semi-rigid batten structure, such as a metal bar structure or an elongated plastic structure.

When this structure is subject to a pressure gradient over the aperture, the obturator elements 640 and foldable joining members 660 will be sucked towards the pre-separator chamber, i.e., in direction of the aperture 610. This will cause the obturator elements 640 to pivot which closes the hatch, at least sufficiently in order for a dust container bag to not get sucked into the pre-separator chamber. When the low pressure in the pre-separator chamber is released, the obturator elements 640 will no longer be held in closed position, but will swing radially outwards, thereby opening the hatch, as illustrated in Figures 7A and 7B. According to some aspects the obturator elements 640 are configured with an increased weight in order to promote opening of the hatch by gravitational force.

This hatch mechanism is not rigid like other known hatch mechanism based on metal lids and the like. Rather, the hatch can be integrally formed in a resilient material which moves and/or vibrates during operation, such as during smaller pressure differences over time in the pre-separator main chamber. This motion by the hatch mechanism prevents dust and slurry from forming more solid lumps which are difficult to empty. Also, the hatch mechanism may even allow dust and slurry to penetrate the hatch mechanism despite a pressure gradient over the aperture when the accumulated dust obtains sufficient weight to overcome the suction force which closes the hatch. This means that the hatch mechanisms disclosed herein may automatically open as needed to dump dust and slurry into the dust container below the hatch. This automatic opening may, e.g., take place when the pre-filter 120 is cleaned by a reverse thrust of air.

Figure 8 schematically illustrates, in terms of a number of functional units, the general components of a control unit 160. Processing circuitry 810 is provided using any combination of one or more of a suitable central processing unit CPU, multiprocessor, microcontroller, digital signal processor DSP, etc., capable of executing software instructions stored in a computer program product, e.g. in the form of a storage medium 830. The processing circuitry 810 may further be provided as at least one application specific integrated circuit ASIC, or field programmable gate array FPGA.

Particularly, the processing circuitry 810 is configured to cause the device 160 to perform a set of operations, or steps, such as the methods discussed herein. For example, the storage medium 830 may store the set of operations, and the processing circuitry 810 may be configured to retrieve the set of operations from the storage medium 830 to cause the device to perform the set of operations. The set of operations may be provided as a set of executable instructions. Thus, the processing circuitry 810 is thereby arranged to execute methods as herein disclosed.

The storage medium 830 may also comprise persistent storage, which, for example, can be any single one or combination of magnetic memory, optical memory, solid state memory or even remotely mounted memory.

The device 160 may further comprise an interface 820 for communications with at least one external device. As such the interface 820 may comprise one or more transmitters and receivers, comprising analogue and digital components and a suitable number of ports for wireline or wireless communication.

The processing circuitry 810 controls the general operation of the control unit 160, e.g., by sending data and control signals to the interface 820 and the storage medium 830, by receiving data and reports from the interface 820, and by retrieving data and instructions from the storage medium 830.

Figure 9 illustrates a computer readable medium 910 carrying a computer program comprising program code means 920 for performing methods and/or for executing the various functions discussed above, when said program product is run on a computer. The computer readable medium and the code means may together form a computer program product 900.

## Claims

1. A dust extractor (100) comprising at least a first and a second valve arrangement (400) and a pre-separator tank (120) with a pre-filter system,
where the pre-filter system comprises at least a first part and a second part, where each valve arrangement (400) is configured to generate a reverse flow of air to clean an associated part of the pre-filter system, in response to actuation of a respective trigger device (470, 480) configured to place the valve arrangement in a pre-filter cleaning position,
where the first valve arrangement is associated with cleaning of the first part of the pre-filter system and the second valve arrangement is associated with cleaning of the second part of the pre-filter system,
where actuation of the trigger devices can be performed alternately where only one of the first and second valve arrangements is placed in its pre-filter cleaning position, or with time overlap where both the first and the second valve arrangements are placed in their respective pre-filter cleaning positions.

2. The dust extractor (100) according to claim 1, where the pre-filter system comprises a pre-filter (200) with a filter aperture (210) and a filter side wall (220), where the side wall is arranged to permit a flow of air to pass the side wall and to prevent at least some particulate matter from passing the side wall,
wherein the filter side wall (220) extends away from the filter aperture (210) and tapers inwards towards a center axis (260) of the filter (200) to define a filter interior volume (V),
where the pre-filter (200) is arranged to hold a separating wall (230) in position in the filter interior volume (V) to divide the filter interior volume (V) into the first and second parts.

3. The dust extractor (100) according to claim 1, where the pre-filter system comprises two separate pre-filters constituting the first and second parts.

4. The dust extractor (100) according to any of the preceding claims, comprising a control unit (160), where the trigger devices comprise electrically actuated control devices (480), where the control unit (160) is arranged to actuate the respective trigger devices (470, 480) of the first and the second valve arrangement with time overlap (500) in response to a pre-separator dump signal.

5. The dust extractor (100) according to claim 4, where the control unit (160) is arranged to synchronously actuate the respective trigger devices (470, 480) of the first and the second valve arrangement in response to the pre-separator dump signal.

6. The dust extractor (100) according to any of claims 4-5, comprising a control input device arranged to generate the pre-separator dump signal in response to user control input.

7. The dust extractor (100) according to any of claims 4-6, where the control unit (160) is arranged to internally and periodically generate the pre-separator dump signal.

8. The dust extractor (100) according to any of the preceding claims, where the trigger devices comprise manual control devices (470) configured to actuate the first and the second valve arrangement (400).
